# EUROPÄISCHE PATENTSCHRIFT

(11) **EP 3 403 304 B1**
(45) Veröffentlichungstag und Bekanntmachung des Hinweises auf die Patenterteilung: **10.11.2021**
(21) Anmeldenummer: 17702775.2
(22) Anmeldetag: 11.01.2017
(51) Int. Cl.: H02B 1/30, H02B 1/40, H02B 1/50, F03D 80/80

(54) **WINDENERGIEANLAGE MIT ELEKTRISCHEM SCHALTSCHRANK**
WIND TURBINE WITH ELECTRIC CABINET
ÉOLIENNE AVEC ARMOIRE ÉLECTRIQUE

(30) Priorität: 11.01.2016 DE 102016000137
(43) Veröffentlichungstag der Anmeldung: 21.11.2018
(73) Patentinhaber: Nidec SSB Wind Systems GmbH, 48499 Salzbergen (DE)
(72) Erfinder: WENSING, Hendrik, 48465 Isterberg (DE)
(74) Vertreter: Bossmeyer, Jörg Peter
(86) Internationale Anmeldenummer: PCT/EP2017/050467
(87) Internationale Veröffentlichungsnummer: WO 2017/121753

(56) Entgegenhaltungen:
- EP-A2- 1 463 167
- FR-A1- 2 884 978
- US-A- 3 895 179
- US-A- 5 011 033

## Beschreibung

Die Erfindung betrifft eine Windenergieanlage mit einem Schaltschrank mit einem U-förmigen Grundblech, bestehend aus einem Boden mit zwei Seitenteilen, zwei mit dem Grundblech verbundenen Stirnblechen und einem Deckel, mit welchem der Schaltschrank verschlossen ist.

In modernen Windenergieanlagen werden zur Verstellung eines oder mehrerer Rotorblätter Schaltschränke in dem rotierenden Teil der Windenergieanlage, der Nabe, benötigt. Derartige Schaltschränke werden auch als Pitch-Schaltschränke bezeichnet. Die eingebaute Elektronik bzw. Elektrik in den Schaltschränken dient zur Steuerung/Regelung der Rotorblattverstellung und bildet eine sicherheitsrelevante Baugruppe der Windenergieanlage, da sie bei Gefahr einer Überlastung durch starken Wind die Rotorblätter aus dem Wind dreht. Derartige Schaltschränke unterliegen einer nahezu permanenten Drehbewegung sowie extremsten mechanischen Belastungen (wie z.B. Vibrationen) und Umweltbedingungen (z.B. Korrosion).

Im allgemeinen Schaltschrankbau sind Schaltschränke üblicherweise kastenförmig und durch einen Boden, Seitenteile und einen Deckel gekennzeichnet. Darüber hinaus sind auch modular aufgebaute Schaltschranksysteme für den Einsatz in Windenergieanlagen aus der DE 10 2010 034 873 A1 oder der DE 10 2010 060 912 A1 bekannt.

Die US 3 895 179 A offenbart einen elektrischen Verteilerkasten mit einem Blechgehäuse, welches eine Rückwand und einteilig mit dieser ausgebildete Seitenwände aufweist, einer Decke, einem bewegbaren Boden, der einen ebenen Abschnitt aufweist, und Scharnieren, mittels welchen der Boden schwenkbar an den Seitenwänden gelagert ist, sodass der ebene Abschnitt des Bodens von einer senkrecht zur Rückwand ausgerichteten normalen Position in eine parallel zur Rückwand ausgerichteten geschwenkten Position gegen die Rückwand schwenkbar ist, und einem entfernbaren Frontpanel, welches zwischen den Seitenwänden montiert ist. Der Boden weist nach unten abstehenden Flansche auf, die innenseitig an der Rückwand und den Seitenwänden durch Schrauben befestigt sind.

Die EP 1 463 167 A2 beschreibt einen Schrank zur Aufnahme elektrischer und elektronischer Geräte und Baugruppen, mit Seitenwänden, einer Rückwand, einer Tür, einem Boden und einer Abdeckung, wobei zur Abschirmung des Schrankinneren gegenüber elektromagnetischen Wellen eine EMV-Abschirmung vorgesehen ist, und wobei die Seitenwände mit dem Boden und der Abdeckung eine selbsttragende Einheit bilden. Die Seitenwände sind mit dem Boden und der Abdeckung in Verbindungsbereichen durch Stauch-Press-Verbindungen verbunden. Zur Bereitstellung der Verbindungsbereiche sind die Seitenwände mit L-förmigen oberen und unteren Schenkeln sowie der Boden und die Abdeckung mit seitlichen Abkantungen versehen.

Üblicherweise werden, vorwiegend im Bodenbereich von Schaltschränken, Öffnungen für die Montage mittels Verbindungstechniken, wie z.B. Schrauben, vorgesehen oder Halterungen an den Schrank geschweißt. Um Halterungen am Schrank, insbesondere lösbar, befestigen zu können, sind vorzugsweise Öffnungen/Bohrungen im Schrank vorgesehen, um z.B. eine Schraubverbindung realisieren zu können. Diese Öffnungen erhöhen jedoch das Risiko, dass an diesen Stellen Wasser in den Schrank eintreten kann.

In Windenergieanlagen müssen alle Verbindungselemente regelmäßig überprüft werden, ob sie sich z.B. durch Vibrationen gelöst haben. Da die Verbindungselemente im Schaltschrank häufig durch andere Bauteile verbaut bzw. verdeckt sind, ist dies mit einem hohen Aufwand verbunden oder es erfolgt keine Überprüfung.

Insbesondere in Schaltschränken, die in Windenergieanlagen vorgesehen sind, sind elektrische Energiespeicher, wie z.B. Batterien oder Kondensatoren, für die Notstromversorgung verbaut. Aufgrund der hohen elektrischen Spannungen besteht unmittelbare Lebensgefahr bei Berührung von elektrische Spannung führenden Teilen. Diese elektrischen Spannungen lassen sich auch nicht komplett wegschalten. Hier besteht für den Monteur oder Servicemitarbeiter eine unmittelbare Gefahr, da er bei der Montage oder Überprüfung der Verbindungselemente mit seinem Werkzeug dicht an elektrische Spannung führenden Teilen arbeiten muss. Dies ist immer dann der Fall, wenn er die Verbindungselemente für die Halterungen montieren oder überprüfen muss.

Des Weiteren ist der Kraftverlauf von den Halterungen zu dem Schaltschrank der Windenergieanlage im rotierenden Betrieb nicht optimal, da hier mechanische Spannungsspitzen in den Übergängen von den Halterungen zu dem Schrank auftreten. Als weiterer Nachteil kommt hinzu, dass Schaltschränke mit geschweißten Halterungen nicht lösbar mit dem Schrank verbunden sind und damit nicht tauschbar/modular sind. Beim Verdrahten der Schaltschränke sind die Halterungen teilweise im Weg, da sie über den eigentlichen Schaltschrank hinwegragen. Außerdem sind die Schränke mit Halterungen deutlich schwerer, was für den Mitarbeiter eine höhere Belastung bedeutet. Da die Materialstärke der Halterungen üblicherweise erheblich dicker ausgeführt ist als die des eigentlichen Schaltschranks, entsteht bei der Fertigung erheblicher Aufwand beim Schweißprozess, um z.B. die geforderten Toleranzen und Schweißnahtqualitäten zu erreichen. Üblicherweise hat der Schaltschrank eine Materialstärke von 2 mm und die Halterungen von 6 mm.

Außerdem treten häufig mechanische Spannungsspitzen an oder in den Übergängen in der Materialstärke von den 2 mm auf die 6 mm auf. Materialversagen tritt üblicherweise an diesen Materialübergängen auf. Um Schweißverzüge zu reduzieren, werden die Halterungen am Schrank häufig nicht rundumverschweißt. Dadurch entstehen zwischen den miteinander zu fügenden Teilen Spalte, die insbesondere bei Edelstahlschaltschränken, wie sie üblicherweise in Windenergieanlagen verbaut werden, Probleme mit sich bringen können. Beim Schweißen von Edelstahl entstehen z.B. Anlauffarben, die entfernt werden müssen. Übliche Verfahren zur Nachbehandlung der Schweißnähte sind u.a. Bürsten, Strahlen, beispielsweise mit Glasperlen, oder Beizen. Durch Bürsten sind die Anlauffarben im Bereich der Spalte aber nur ungenügend entfernbar. Ferner kann sich beim Strahlen das Strahlgut in die Spalte setzen. Im Betrieb in der Windenergieanlage kann sich das Strahlgut dann durch Vibrationen lösen, in die Elektrik-/Elektronikbauteile setzten und deren Funktion blockieren, wodurch bei der Windenergieanlage die Rotorblätter nicht mehr aus dem Wind gedreht werden können, was zu einem Totalschaden der Anlage führen kann. Wenn die Anlauffarben durch Beizen entfernt werden sollen, müssen sämtliche Beizrückstände entfernt werden, da sonst eine erhöhte Korrosion auftreten kann. Dies ist wegen der Spalte aber nicht möglich. Auch bei einer Beschichtung von Schaltschränken sind Spalte problematisch, da diese nicht zwingend durch die Beschichtung geschlossen werden, sodass dort Korrosion auftreten kann. Als ein weiterer Nachteil des Stands der Technik hat sich in der Praxis herausgestellt, dass die Schweißnähte häufig in Blechbiegungen des Schaltschranks liegen. Durch eine Biegung (die insbesondere mit Stauchen und Strecken des Materials verbunden ist) entsteht aber eine Materialschwächung. Deshalb sollen in der Praxis die Schweißnähte möglichst nicht im Bereich von Biegungen liegen, da die Schweißnähte durch den Wärmeeintrag auch eine Schwächung des Materials hervorrufen.

Aufgabe der Erfindung ist es, einen Schaltschrank für den Einsatz in dem rotierenden Teil einer Windenergieanlage, vorzuschlagen, der insbesondere Halterungen aufweist, die, bevorzugt modular und/oder lösbar, angebracht werden können, ohne dass sich benötigte Verbindungselemente im Schrankinneren befinden müssen. Vorteilhaft sollen des Weiteren, vorzugsweise bei Edelstahlschränken, die Anlauffarben der Schweißnähte prozesssicher durch Beizen, Strahlen, wie z.B. Glasperlstrahlen, oder Bürsten entfernt werden können und/oder Metall-Schaltschränke prozesssicher beschichtet werden können (z.B. durch Tauchlackierung, Pulverbeschichtung, KTL-Beschichtung). Die Schrankgeometrie und die Halterungen sollen insbesondere möglichst einfach gehalten werden, sodass Kostenvorteile entstehen. Außerdem sollen die Schaltschränke und Halterungen bevorzugt eine Einheit ergeben, sodass die auftretenden Kräfte im Betrieb der Windenergieanlage nicht zu Schädigungen des Schranks und/oder der Halterungen führen und/oder mechanische Spannungsspitzen in den Übergängen von dicken zu dünnen Blechen reduziert werden können. Der Schaltschrank soll insbesondere bis auf den Deckel geschlossen sein, sodass kein Wasser eintreten kann.

Diese Aufgabe wird erfindungsgemäß durch eine Windenergieanlage mit einem Schaltschrank nach Anspruch 1 gelöst. Bevorzugte Weiterbildungen der Erfindung sind in den Unteransprüchen und in der nachfolgenden Beschreibung gegeben.

Der erfindungsgemäße Schaltschrank an einer Windenergieanlage weist ein U-förmiges Grundblech, bestehend aus einem Boden mit zwei Seitenteilen, die vorzugsweise aus einem Blech gefertigt sind, zwei mit dem Grundblech verbundene Stirnbleche und einen Deckel auf, mit welchem der Schaltschrank verschlossen ist, wobei die Stirnbleche jeweils mit einem, vorzugsweise definierten, Abstand gegenüber einer, insbesondere stirnseitigen, Außenkante des Grundblechs zurückgesetzt sind, sodass das Grundblech nach außen abstehende Laschen bildet. Erfindungsgemäß sind die Laschen für die Befestigung von Halterungen nutzbar. Erfindungsgemäß sind die Laschen für die Befestigung des Schaltschranks an der oder einer Windenergieanlage nutzbar.

Durch die nach außen abstehenden Laschen ist es möglich, den Schaltschrank mittels der Laschen an Halterungen und/oder an einer Windenergieanlage zu befestigen, ohne im Schaltschrankinneren befindliche Verbindungselemente und/oder ins Schaltschrankinnere hineinreichende Befestigungslöcher vorsehen zu müssen. Dichtigkeitsprobleme und/oder ein Öffnen des Schaltschranks zu dessen Montage oder Demontage können somit vermieden werden. Insbesondere schafft die Erfindung die Möglichkeit, die Halterungen am Schrank außerhalb der eigentlichen Schaltschrankgeometrie, vorzugsweise modular, befestigen zu können. Bevorzugt schafft die Erfindung ferner die Möglichkeit, einen optimalen Kraftverlauf und/oder Krafteintrag in die Halterungen berücksichtigen zu können. Der Boden kann insbesondere auch als Bodenteil bezeichnet werden.

Gemäß einer ersten Variante sind die Laschen z.B. durch den Boden und die Seitenteile gebildet. Gemäß einer zweiten Variante sind die Laschen z.B. durch oder nur durch die Seitenteile gebildet. Gemäß einer dritten Variante sind die Laschen z.B. durch den Boden und eines oder nur eines der Seitenteile gebildet.

Gemäß einer nicht beanspruchten Ausgestaltung sind die Seitenteile an ihren stirnseitigen Endbereichen rechtwinklig nach außen abgekantet, wobei, insbesondere über die Seitenteile oder Längsseiten hinaus, verlängerte Bereiche der Stirnbleche zusammen mit den abgekanteten Bereichen der Seitenteile die Laschen bilden. Hierdurch kann insbesondere eine Materialdoppelung erzielt werden. Bevorzugt liegen die abgekanteten Bereiche der Seitenteile an den, insbesondere über die Seitenteile oder Längsseiten hinaus, verlängerten Bereichen der Stirnbleche an.

Die Anzahl der Laschen beträgt zwei oder wenigstens zwei oder drei oder wenigstens drei oder vier oder wenigstens vier oder sechs oder wenigsten sechs. Bevorzugt sind die Laschen eben oder jeweils eben ausgebildet.

Gemäß einer Weiterbildung schließen zwei benachbarte und/oder aneinander angrenzende der Laschen einen oder jeweils einen rechten Winkel miteinander ein. Beispielsweise schließen zwei oder jeweils zwei der Laschen, die durch die Seitenteile gebildet sind, mit einer oder jeweils einer der Laschen, die durch den Boden gebildet ist, einen oder jeweils einen rechten Winkel ein. Bevorzugt bilden zwei oder jeweils zwei der Laschen, die durch die Seitenteile gebildet sind, zusammen mit einer oder jeweils einer der Laschen, die durch den Boden gebildet ist, eine oder jeweils eine U-förmige Laschenanordnung.

Erfindungsgemäß ist eine oder wenigstens eine Halterung vorgesehen, die an wenigstens einer der Laschen befestigt ist. Beispielsweise ist die oder die wenigstens eine Halterung an der wenigstens einen Lasche angeschraubt und/oder angenietet und/oder angeschweißt. Erfindungsgemäß liegt die oder die wenigstens eine Halterung an der wenigstens einen Lasche mit einer ebenen Anlagefläche an. Erfindungsgemäß ist die oder die wenigstens eine Halterung an zwei, an drei oder mehreren der Laschen befestigt. Beispielsweise ist die oder die wenigstens eine Halterung an den zwei oder drei oder mehreren Laschen angeschraubt und/oder angenietet und/oder angeschweißt. Erfindungsgemäß liegt die oder die wenigstens eine Halterung an den zwei oder drei oder mehreren Laschen mit oder jeweils mit einer ebenen Anlagefläche an. Im Falle von drei Laschen bilden diese bevorzugt die oder eine U-förmige Laschenanordnung.

Gemäß einer Weiterbildung sind zwei oder mehrere Halterungen vorgesehen. Bevorzugt ist jede der Halterungen an zwei oder drei oder mehreren der Laschen befestigt. Beispielsweise ist jede der Halterungen an den oder den jeweiligen zwei oder drei oder mehreren Laschen angeschraubt und/oder angenietet und/oder angeschweißt. Vorzugsweise liegt jede der Halterungen an den oder den jeweiligen zwei oder drei oder mehreren Laschen mit oder jeweils mit einer ebenen Anlagefläche an. Bei jeder der Halterungen, die an drei der Laschen befestigt ist, bilden die oder die jeweiligen Laschen bevorzugt die oder eine U-förmige Laschenanordnung.

Bevorzugt ist der Schaltschrank mit den Laschen und/oder mit der oder den Halterungen an der oder einer Windenergieanlage und/oder an oder in einem rotierenden Teil der oder einer Windenergieanlage befestigt, vorzugsweise mittels einer oder mehrerer Schraubverbindungen und/oder einer oder mehrerer Nietverbindungen und/oder einer oder mehrerer Schweißverbindungen. Beispielsweise ist die Halterung oder sind die Halterungen mit oder jeweils mit der oder einer Windenergieanlage und/oder mit dem oder einem rotierenden Teil der oder einer Windenergieanlage verschraubt und/oder verschweißt. Erfindungsgemäß ist der Schaltschrank an oder in dem oder einem rotierenden Teil der oder einer Windenergieanlage angeordnet und/oder befestigt. Der rotierende Teil ist oder umfasst bevorzugt einen Rotor und/oder eine Nabe (Rotornabe). Vorteilhaft umfasst der Rotor die Nabe. Insbesondere ist der rotierende Teil um eine Rotorachse drehbar. Vorteilhaft sind mehrere Rotorblätter an dem rotierenden Teil und/oder der Nabe befestigt und/oder gelagert. Insbesondere sind die Rotorblätter jeweils um eine Blattachse drehbar an dem rotierenden Teil und/oder der Nabe gelagert.

Gemäß einer Ausgestaltung sind Befestigungslöcher in wenigstens einer der oder den Laschen vorgesehen. Insbesondere erstrecken sich durch die oder einige der Befestigungslöcher Befestigungsmittel hindurch, mittels welchen die wenigstens eine oder die Laschen an oder jeweils an der oder der wenigstens einen oder an einer der oder an den Halterungen und/oder an der oder einer Windenergieanlage und/oder an dem oder einem rotierenden Teil der oder einer Windenergieanlage befestigt sind. Vorzugsweise sind in der oder der wenigstens einen oder in den Halterungen und/oder in der oder einer Windenergieanlage und/oder in dem oder einem rotierenden Teil der oder einer Windenergieanlage Löcher vorgesehen, durch welche sich die Befestigungsmittel hindurch erstrecken. Diese Löcher sind insbesondere mit den oder einigen der Befestigungslöcher zur Überdeckung gebracht. Bevorzugt bilden oder umfassen die Befestigungsmittel Nieten und/oder Schrauben und/oder Bolzen.

Gemäß einer Weiterbildung sind Befestigungslöcher in der oder der wenigstens einen oder in den Halterungen vorgesehen. Insbesondere erstrecken sich durch die oder einige der Befestigungslöcher Befestigungsmittel hindurch, mittels welchen die oder die wenigstens eine Halterung oder die Halterungen an der oder einer Windenergieanlage und/oder an dem oder einem rotierenden Teil der oder einer Windenergieanlage befestigt sind. Vorzugsweise sind in der oder einer Windenergieanlage und/oder in dem oder einem rotierenden Teil der oder einer Windenergieanlage Löcher vorgesehen, durch welche sich die Befestigungsmittel hindurch erstrecken. Diese Löcher sind insbesondere mit den oder einigen der Befestigungslöcher zur Überdeckung gebracht. Bevorzugt bilden oder umfassen die Befestigungsmittel Nieten und/oder Schrauben und/oder Bolzen.

Gemäß einer Ausgestaltung sind an dem Grundblech und/oder an einem oder wenigstens einem der Stirnbleche zusätzlich Kantungen vorgesehen, sodass eine oder wenigstens eine zusätzliche Ebene an dem Grundblech und/oder an dem wenigstens einen Stirnblech geschaffen ist.

Gemäß einer Weiterbildung sind die Stirnbleche fest und/oder starr mit dem Grundblech verbunden. Bevorzugt sind die Stirnbleche mit dem Grundblech verschweißt oder verklebt. Insbesondere ist der Schaltschrank bis auf den Deckel rundum dichtgeschweißt.

Bevorzugt bildet das Grundblech zusammen mit den Stirnblechen einen Grundkörper, der insbesondere kastenförmig ist. Vorteilhaft weist der Grundkörper und/oder der Schaltschrank eine Schaltschranköffnung auf, die insbesondere mit dem Deckel verschlossen ist. Vorzugsweise ist der Schaltschrank kastenförmig. Bevorzugt ist der Boden oder die Bodenfläche des Grundblechs rechteckig, quadratisch oder vieleckig. Beispielsweise bildet der Schaltschrank einen Würfel, einen Quader oder ein Prisma. Vorzugsweise bilden die Seitenteile und die Stirnbleche eine, insbesondere geschlossene, umlaufende Wandung des Schaltschranks und/oder des Grundkörpers.

Die Seitenteile liegen bevorzugt einander gegenüber und/oder sind bevorzugt einander gegenüberliegend angeordnet. Vorzugsweise ist das Grundblech bezüglich einer Mittelebene spiegelsymmetrisch oder im Wesentlichen spiegelsymmetrisch ausgebildet. Vorteilhaft sind die Seitenteile bezüglich der Mittelebene spiegelsymmetrisch oder im Wesentlichen spiegelsymmetrisch ausgebildet und/oder angeordnet. Vorzugsweise bilden die Seitenteile Längsseiten oder die Längsseiten des Schaltschranks. Insbesondere verlaufen die Mittelebene und/oder die Seitenteile und/oder die Längsseiten in einer Längsrichtung.

Die Seitenteile sind bevorzugt von dem Grundblech und/oder dem Boden abgekantet und/oder abgebogen. Vorteilhaft besteht das Grundblech aus Blech und/oder aus einem einzigen Blech. Vorzugsweise sind die Seitenteile und der Boden aus einem einzigen und/oder gemeinsamen Blech gefertigt. Das Grundblech besteht bevorzugt aus Metall. Beispielsweise besteht das Grundblech aus einem Leichtmetall, wie z.B. Aluminium. Vorteilhaft besteht das Grundblech aus einem Eisenwerkstoff, wie z.B. Stahl, vorzugsweise Edelstahl. Unter dem Ausdruck, dass das Grundblech U-förmig ist, ist insbesondere zu verstehen, dass das Grundblech im Querschnitt U-förmig ist und/oder eine U-Form aufweist. Vorzugsweise sind die Schenkel der U-Form und/oder des U-förmigen Querschnitts durch die Seitenteile des Grundblechs gebildet. Vorteilhaft ist der Boden der U-Form und/oder des U-förmigen Querschnitts durch den Boden des Grundblechs gebildet.

Bevorzugt liegen die Stirnbleche, insbesondere in der oder einer Längsrichtung, einander gegenüber und/oder sind bevorzugt, insbesondere in der oder einer Längsrichtung, einander gegenüberliegend angeordnet. Vorzugsweise sind die Stirnbleche quer zu der Mittelebene und/oder zu den Seitenteilen und/oder zu den Längsseiten angeordnet und/oder ausgerichtet. Bevorzugt verläuft die Mittelebene in Längsrichtung. Vorteilhaft sind die Stirnbleche zwischen den Seitenteilen angeordnet und/oder die Stirnbleche erstrecken sich bevorzugt zwischen den Seitenteilen und/oder die Stirnbleche erstrecken sich vorzugsweise von einem der Seitenteile zu dem oder einem anderen der Seitenteile. Insbesondere bilden die Stirnbleche Stirnseiten des Schaltschranks. Vorteilhaft bestehen die Stirnbleche aus Blech und/oder jeweils aus Blech. Vorzugsweise bestehen die Stirnbleche aus Metall. Beispielsweise bestehen die Stirnbleche aus einem Leichtmetall, wie z.B. Aluminium. Vorteilhaft bestehen die Stirnbleche aus einem Eisenwerkstoff, wie z.B. Stahl, vorzugsweise Edelstahl.

Der Deckel besteht bevorzugt aus Kunststoff oder aus Metall. Beispielsweise besteht der Deckel aus einem Leichtmetall, wie z.B. Aluminium. Vorteilhaft besteht der Deckel aus einem Eisenwerkstoff, wie z.B. Stahl, vorzugsweise Edelstahl.

Bevorzugt besteht die oder die wenigstens eine Halterung oder bestehen die Halterungen aus Blech und/oder jeweils aus Blech. Vorzugsweise besteht die oder die wenigstens eine Halterung oder bestehen die Halterungen aus Kunststoff oder aus Metall und/oder jeweils aus Kunststoff oder aus Metall. Beispielsweise besteht die oder die wenigstens eine Halterung oder bestehen die Halterungen aus und/oder jeweils aus einem Leichtmetall, wie z.B. Aluminium. Vorteilhaft besteht die oder die wenigstens eine Halterung oder bestehen die Halterungen aus und/oder jeweils aus einem Eisenwerkstoff, wie z.B. Stahl, vorzugsweise Edelstahl. Die oder die wenigstens eine Halterung oder die Halterungen bestehen beispielsweise aus einem anderen Material als das Grundblech und/oder die Stirnbleche und/oder der Deckel und/oder der Schaltschrank. Bevorzugt weist die oder die wenigstens eine Halterung oder weist wenigstens eine der oder weisen die oder mehrere der oder zwei der Halterungen einen oder jeweils einen dem Schaltschrank zugewandten, U-förmigen und/oder im Querschnitt U-förmigen Endbereich auf, mittels welchem die oder die wenigstens eine oder die jeweilige Halterung an den oder den jeweiligen Laschen befestigt ist.

Gemäß einer Ausgestaltung sind im Schaltschrank und/oder im Inneren des Schaltschranks Bauelemente und/oder Baugruppen und/oder Montageplatten vorgesehen, die insbesondere an dem Schaltschrank befestigt sind. Vorteilhaft sind die Bauelemente und/oder Baugruppen und/oder Montagplatten durch Bolzen oder Muttern an dem Schrank befestigt. Insbesondere sind die Bolzen oder Muttern im Schaltschrank und/oder im Inneren des Schaltschranks angebracht. Vorzugsweise sind oder umfassen die Bauelemente und/oder Baugruppen elektrische und/oder elektronische Bauelemente und/oder Baugruppen und/oder Batterien und/oder Kondensatoren. Vorteilhaft ist in dem Schaltschrank und/oder im Inneren des Schaltschranks wenigstens eine Pitchwinkel-Steuerung vorgesehen, mittels welcher der oder die Pitchwinkel eines oder mehrerer Rotorblätter der oder einer Windenergieanlage steuerbar und/oder regelbar ist oder sind. Bei dem Schaltschrank handelt es sich insbesondere um einen elektrischen Schaltschrank und/oder Pitchschaltschrank.

Bevorzugt ist oder wird der Schaltschrank aus drei Teilearten gefertigt, dem U-förmigen Grundblech, den beiden Stirnblechen und dem Deckel, wobei das Grundblech aus dem Boden mit den beiden Seitenteilen (Längsseiten), die insbesondere aus einem oder dem einen Blech gefertigt sind, besteht. Vorteilhaft sind die Stirnbleche mit einem definierten Abstand zur Außenkante des Grundblechs verbunden, sodass der Boden und die Seitenteile Laschen bilden, die für die Befestigung der Halterungen genutzt werden können.

Eine optimale Krafteinleitung von den dicken Halterungen zu dem dünnwandigen Schrank erfolgt insbesondere dadurch, dass die oder jede Halterung mit den durch die Seitenteile bzw. das Bodenteil gebildeten Laschen des Schaltschranks eine Ebene bildet. Damit werden die Kräfte von den Halterungen der Länge nach in das Blech eingebracht und andersherum. In dieser Richtung können die Bleche die höchsten Kräfte aufnehmen. Dies ist in allen drei Richtungen oder Raumrichtungen (x, y, z) gewährleistet. Die üblicherweise im Übergang von den dicken Halterungen zu dem dünnen Schaltschrankblech auftretenden mechanischen Spannungsspitzen sind somit stark reduziert.

Der Schaltschrank weist bis auf den Deckel und/oder bis auf die oder eine durch den Deckel verschlossene Schaltschranköffnung insbesondere keine Öffnungen auf, wo Wasser eindringen könnte, da der Schrankinnenraum vorzugsweise rundum dichtgeschweißt wird. Der erfinderische Schaltschrank hat somit insbesondere eine sehr einfache Geometrie und kann aus unterschiedlichen Materialien, wie z.B. Edelstahl oder Stahl, gefertigt werden, was Kostenvorteile bringt. Bei Edelstahlschaltschränken können beispielsweise die Anlauffarben, die beim Schweißen entstehen und entfernt werden müssen, durch fast alle gängigen Verfahren wie Bürsten, Beizen oder Glasperlstrahlen prozesssicher entfernt werden. Auch beim Beschichten von Schaltschränken aus Stahl oder Edelstahl treten keine Probleme auf, da es keine Spalte mehr gibt, in denen sich Reste von dem Strahlgut oder der Beize festsetzen können.

Bevorzugt sind oder werden die Halterungen nur von außen an den Schrank angeschraubt, sodass zum Überprüfen dieser Verbindung nicht in den Schrank gegriffen werden muss. Die Gefahr eines elektrischen Schlags ist damit ausgeschlossen. Ferner können die Halterungen aus einem anderen Material als dem des Schranks hergestellt sein oder werden. Bevorzugt sind die Halterungen modular und können auch erst nach dem Bestücken des Schaltschranks angebracht werden. Es sind auch kaum oder keine Schweißverzüge zu erwarten, sodass sehr enge Toleranzen eingehalten werden können. Der Schaltschrank ist in Verbindung mit den Halterungen deutlich günstiger, da Material eingespart und Fertigungszeiten reduziert werden können. Ferner kann der Schaltschrank ohne größeren Aufwand an andere Schrankabmessungen angepasst werden. Der Schaltschrank kann ohne Halterungen mit der Elektrik bzw. Elektronik gefertigt, geprüft und bevorratet
werden, sodass je nach Kundenwunsch die passenden Halterungen angebracht werden können.

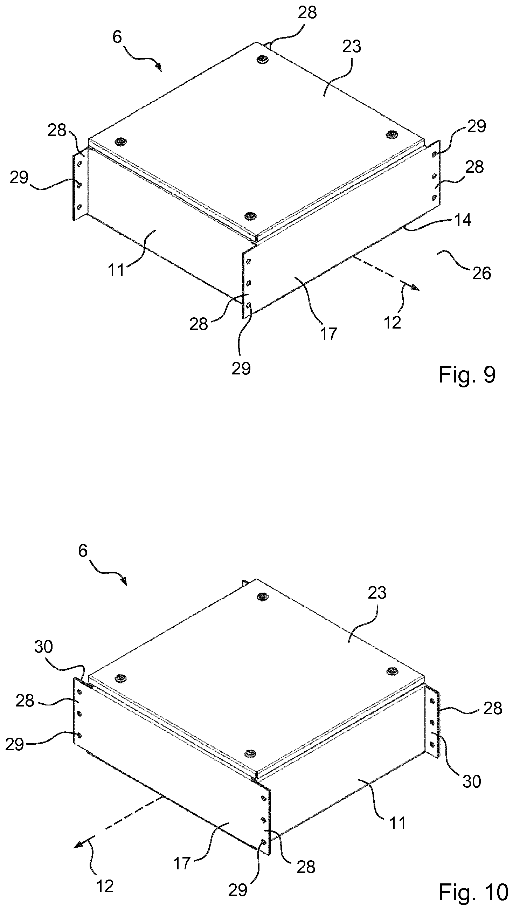

Gemäß einer vorteilhaften Ausführungsform der Erfindung sind nur zwei Seiten als Laschen verlängert, z.B. nur die Seitenteile oder ein Seitenteil und das Bodenteil. Gemäß einer nicht beanspruchten Ausführungsform können auch die Stirnbleche überstehen und als Laschen für die Befestigung der Halterungen eingesetzt werden, wie dies z.B. in Fig. 9 dargestellt ist. Gemäß einer nicht beanspruchten Ausführungsform können auch die Stirnbleche verlängert werden und die Seitenteile um 90° abgekantet werden, sodass eine Materialdoppelung für die Befestigung der Halterungen entsteht, wie dies z.B. aus Fig. 10 ersichtlich ist.

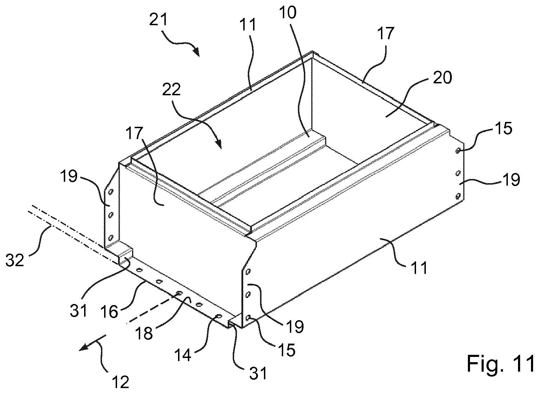

Die Grundform des Schaltschranks muss nicht rechteckig oder quadratisch sein, sondern kann auch ein Vieleck bilden. Durch zusätzliche Kantungen am Grundblech und/oder Stirnblech kann eine zusätzliche Ebene für z.B. eine Montageplatte oder andere größere Bauteile, wie beispielsweise Batterieeinheiten, geschaffen werden, wie dies z.B. in Fig. 11 dargestellt ist.

Im Schrank können beispielsweise Bolzen oder Muttern angebracht sein oder werden, um Montageplatten oder Bauteile zu befestigen. Die Stirnbleche sind bevorzugt verschweißt, es können aber auch andere Verbindungstechniken, wie z.B. Kleben und/oder Nieten, genutzt werden. Bevorzugte Materialien sind Edelstahl oder Stahl, es können aber auch andere Materialien, wie z.B. Kunststoffe, eingesetzt werden, welche für den Einsatz in Windenergieanlagen geeignet sind.

Die Erfindung wird nachfolgend anhand bevorzugter Ausführungsformen unter Bezugnahme auf die Zeichnung erläutert. In der Zeichnung zeigen:
Fig. 1 einen herkömmlichen elektrischen Schaltschrank (Pitchschaltschrank) zur Verstellung von Rotorblättern einer Windenergieanlage, angeordnet in deren rotierendem Teil,
Fig. 2 einen herkömmlichen Schaltschrank mit an einer Bodenplatte angeschweißten Halterungen,
Fig. 3 einen herkömmlichen Schaltschrank mit seitlich angeordneten Halterungen für die Befestigung,
Fig. 4 eine perspektivische Ansicht eines Schaltschranks gemäß einer ersten Ausführungsform der Erfindung,
Fig. 5 ein U-förmiges Grundblech des Schaltschranks nach Fig. 4,
Fig. 6 das Grundblech nach Fig. 5 zusammen mit Stirnblechen, wobei an Seitenteilen und am Boden des Grundblechs angeordnete Laschen für die Befestigung von Halterungen vorgesehen sind,
Fig. 7 die Anordnung nach Fig. 6 gemäß einer ersten Abwandlung der ersten Ausführungsform, wobei andere Halterungen an den Laschen befestigt sind,
Fig. 8 eine perspektivische Ansicht eines Schaltschranks gemäß einer zweiten Abwandlung der ersten Ausführungsform, wobei eine Halterungsplatte an den Laschen befestigt ist,
Fig. 9 eine perspektivische Ansicht eines Schaltschranks gemäß einer zweiten Ausführungsform, die nicht Teil der Erfindung ist,
Fig. 10 eine perspektivische Ansicht eines Schaltschranks gemäß einer Abwandlung der zweiten Ausführungsform, die nicht Teil der Erfindung ist, wobei die Stirnbleche verlängert und die Seitenteile um 90° abgekantet sind,
Fig. 11 eine perspektivische Ansicht eines Schaltschranks gemäß einer dritten Ausführungsform der Erfindung, wobei durch zusätzliche Kantungen am Grundblech eine zusätzliche Ebene für eine Montageplatte oder andere größere Bauteile geschaffen ist, und
Fig. 12 eine schematische Ansicht einer Windenergieanlage mit einem erfindungsgemäßen Schaltschrank.

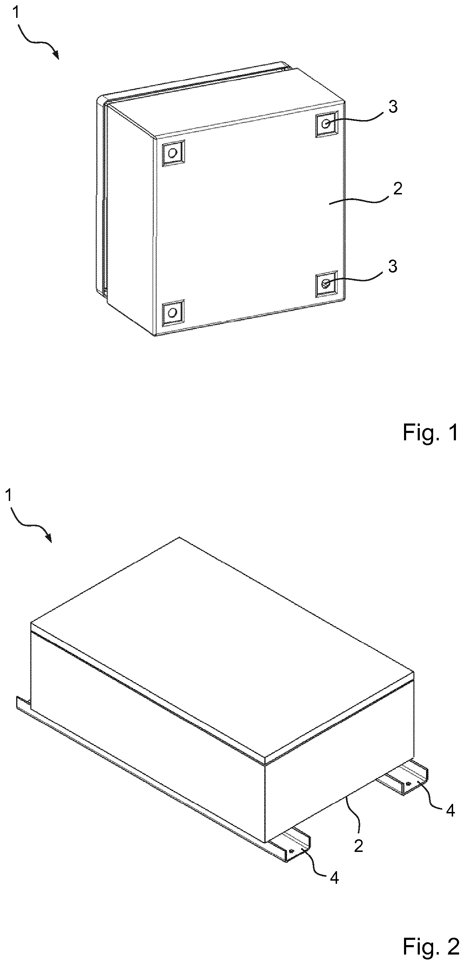

Aus Fig. 1 ist eine perspektivische Ansicht eines herkömmlichen Schaltschranks 1 ersichtlich, wobei in einem Boden 2 des Schaltschranks 1 mehrere Montageöffnungen 3 vorgesehen sind, die sich durch den Boden 2 hindurch bis in das Innere des Schaltschranks 1 erstrecken. Durch die Montageöffnungen 3 können Schrauben zum Befestigen des Schaltschranks an Halterungen hindurch geführt werden.

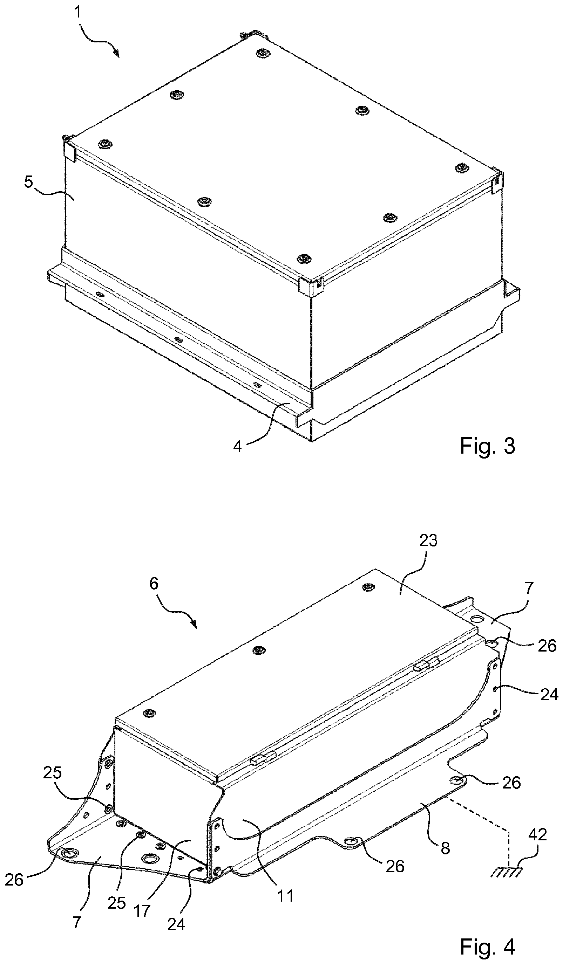

Aus Fig. 2 ist eine perspektivische Ansicht eines anderen herkömmlichen Schaltschranks 1 ersichtlich, wobei an einem Boden 2 des Schaltschranks 1 mehrere Halterungen 4 angeschweißt oder angeschraubt sind. Ferner zeigt Fig. 3 eine perspektivische Ansicht eines weiteren herkömmlichen Schaltschranks 1, wobei Halterungen 4 an Seitenflächen 5 des Schaltschranks 1 angeschweißt sind.

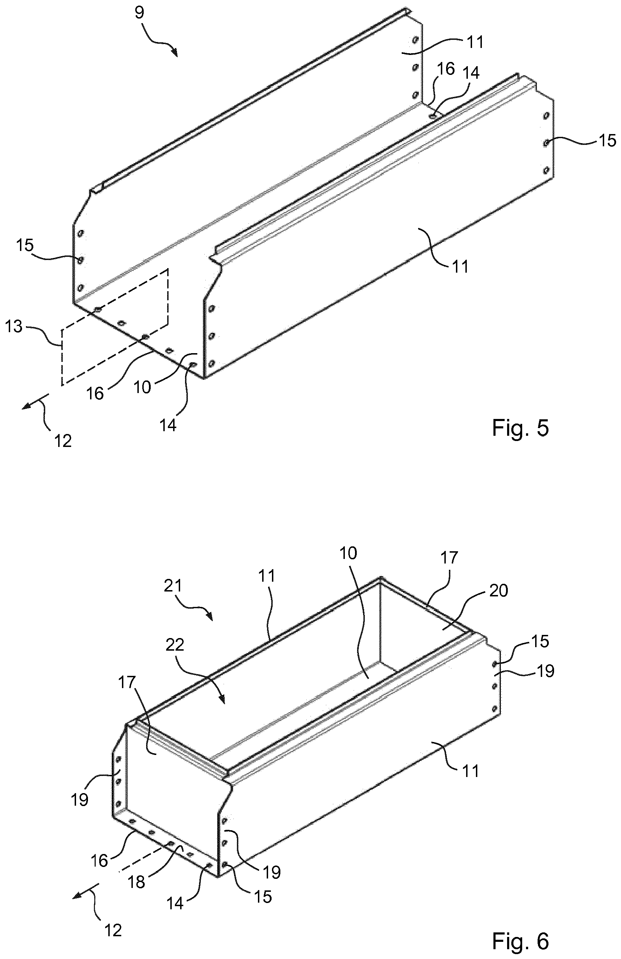

Aus Fig. 4 ist eine perspektivische Ansicht eines Schaltschranks 6 gemäß einer ersten Ausführungsform ersichtlich, an dem mehrere Halterungen 7 und 8 befestigt sind. Dabei bilden die Halterungen 7 stirnseitige Halterungen und die Halterungen 8 seitliche Halterungen. Bestandteile des Schaltschranks 6 sowie die Montage dieser Bestandteile zu dem Schaltschrank 6 werden unter zusätzlicher Bezugnahme auf die Fig. 5 und 6 beschrieben.

Aus Fig. 5 ist eine perspektivische Ansicht eines Grundblechs 9 des Schaltschranks 6 ersichtlich, welches einen Boden 10 und zwei einander gegenüberliegende Seitenteile 11 umfasst, die von dem Boden 10 abgekantet sind. Das Grundblech 9 ist stirnseitig offen und/oder weist zwei offene Stirnseiten auf, die in einer Längsrichtung 12 einander gegenüber liegen. Jede dieser offenen Stirnseiten ist durch den Boden 10 und die Seitenteile 11 begrenzt. Das Grundblech 9 ist bezüglich einer in Längsrichtung 12 verlaufenden Mittelebene 13 spiegelsymmetrisch ausgebildet, die lediglich schematisch angedeutet und insbesondere senkrecht zum Boden 10 ausgerichtet ist. An seinen stirnseitigen Enden ist das Grundblech 9 mit mehreren Löchern 14 und 15 versehen, wobei die Löcher 14 in dem Boden 10 und die Löcher 15 in den Seitenteilen 11 vorgesehen sind. Ferner weist das Grundblech 9 an seinen stirnseitigen Enden Außenkanten 16 auf.

Gemäß Fig. 6 ist das Grundblech 9 stirnseitig und/oder sind die offenen Stirnseiten des Grundblechs 9 durch zwei Stirnbleche 17 geschlossen, die zwischen den Seitenteilen 11 angeordnet sind und in Längsrichtung 12 einander gegenüberliegen. Dabei sind die Stirnbleche 17 jeweils mit einem, insbesondere definierten, Abstand gegenüber der jeweiligen Außenkante 16 des Grundblechs 9 zurückgesetzt, sodass das Grundblech 9 nach außen abstehende Laschen 18 und 19 bildet. Dabei sind die Laschen 18 an dem Boden 10 und die Laschen 19 an den Seitenteilen 11 vorgesehen. Ferner sind die Löcher 14 und 15 in den Laschen 18 und 19 vorgesehen, wobei die Löcher 14 in den Laschen 18 und die Löcher 15 in den Laschen 19 vorgesehen sind. Die Stirnbleche 17 sind fest, insbesondere stoffschlüssig und/oder formschlüssig, mit dem Grundblech 9 verbunden. Vorzugsweise sind die Stirnbleche 17 mit dem Grundblech 9 verschweißt.

Die Stirnbleche 17 bilden zusammen mit dem Grundblech 9 einen bis auf eine Schaltschranköffnung 20 verschlossenen, insbesondere kastenförmigen, Grundkörper 21, der einen Innenraum 22 begrenzt. Die Schaltschranköffnung 20 wird mit einem Deckel 23 verschlossen, sodass sich der Schaltschrank 6 gemäß Fig. 4 ergibt. Ferner werden die Halterungen 7 und 8 an den Laschen 18 und 19 befestigt.

Die Seitenteile 11 des Grundblechs 9 bilden insbesondere Längsseiten des Grundblechs 9 und/oder des Grundkörpers 21 und/oder des Schaltschranks 6. Der Boden 10 des Grundblechs 9 bildet bevorzugt einen Boden des Grundkörpers 21 und/oder des Schaltschranks 6. Ferner bilden die Stirnbleche 17 insbesondere Stirnseiten oder geschlossene Stirnseiten des Grundkörpers 21 und/oder des Schaltschranks 6.

Gemäß Fig. 4 ist die Schaltschranköffnung 20 mit dem Deckel 23 verschlossen. Ferner sind die Halterungen 7 und 8 an den Laschen 18 und 19 befestigt, beispielsweise mit diesen vernietet. Alternativ sind die Halterungen 7 und 8 z.B. mit den Laschen 18 und 19 verschraubt. Insbesondere weisen die Halterungen 7 und 8 Löcher 24 auf, die oder von denen einige mit den oder mit einigen der Löcher 14 und 15 zur Überdeckung gebracht sind, wobei durch die oder einige der Löcher 24 Befestigungsmittel 25 hindurch geführt sind, mittels welchen die Halterungen 7 und 8 an den Laschen 18 und 19 befestigt sind. Dabei sind die Halterungen 7 an den Laschen 18 und 19 und die Halterungen 8 nur an den Laschen 19 befestigt. Insbesondere sind die Halterungen 7 an ihrem dem Schaltschrank 6 und/oder Grundkörper 21 zugewandten Endbereich U-förmig und/oder im Querschnitt U-förmig ausgebildet. Vorzugsweise sind bei den Halterungen 7 die Löcher 24 in diesem Endbereich vorgesehen. Bevorzugt bilden oder umfassen die Befestigungsmittel 25 Nieten und/oder Schrauben.

Der Schaltschrank 6 ist mittels der Halterungen 7 und 8 an einem lediglich schematisch angedeuteten rotierenden Teil 42 einer Windenergieanlage befestigt oder befestigbar. Dazu sind die Halterungen 7 und 8 mit Befestigungslöchern 26 versehen, durch welche Befestigungsmittel, wie z.B. Schrauben oder Bolzen, hindurch geführt oder führbar sind, mittels welchen die Halterungen 7 und 8 an dem rotierenden Teil 42 der Windenergieanlage befestigt oder befestigbar sind. Bevorzugt bildet der rotierende Teil 42 eine Rotornabe der Windenergieanlage. Insbesondere ist der Schaltschrank 6 im rotierenden Teil 42 der Windenergieanalage angeordnet.

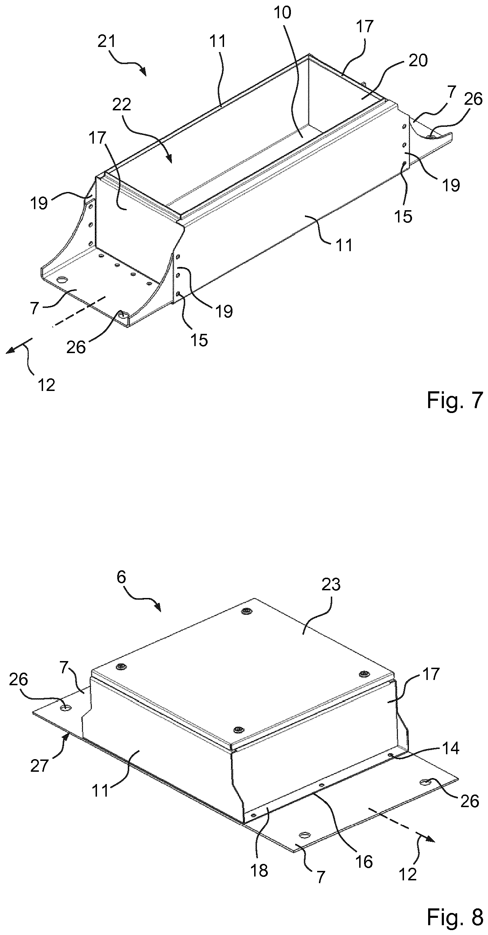

Aus Fig. 7 ist eine erste Abwandlung der ersten Ausführungsform ersichtlich, wobei die seitlichen Halterungen entfallen. Es sind lediglich stirnseitige Halterungen 7 vorgesehen, die an den Laschen 18 und 19 befestigt sind. Ferner sind Befestigungslöcher 26 in den Halterungen 7 vorgesehen. Allerdings weisen die stirnseitigen Halterungen 7 im Vergleich zu Fig. 4 eine abweichende Form auf. Aus Fig. 8 ist eine zweite Abwandlung der ersten Ausführungsform ersichtlich, wobei die seitlichen Halterungen entfallen. Es ist lediglich eine an den Laschen 18 befestigte Halterungsplatte 27 vorgesehen, die stirnseitig und/oder in Längsrichtung 12 über die Außenkanten 16 hinausragt und somit stirnseitige Halterungen 7 bildet. Die Halterungen 7 sind hier also keine Einzelteile, sondern Teil der Halterungsplatte 27, die z.B. auch als Bodenplatte bezeichnet werden kann. Ferner sind Befestigungslöcher 26 in der Halterungsplatte 27 und/oder in den Halterungen 7 vorgesehen. Die Halterungen 7 bilden insbesondere jeweils eine ebene Halterung.

Aus Fig. 9 ist eine perspektivische Ansicht eines Schaltschranks 6 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Gemäß der zweiten Ausführungsform sind die Stirnbleche 17 nicht gegenüber den Außenkanten des Grundblechs zurückgesetzt, sondern gegenüber den Seitenteilen 11 oder durch diese gebildete Längsseiten verlängert, sodass die Stirnbleche 17 nach außen abstehende Laschen 28 bilden. Ferner sind Löcher 29 in den Laschen 28 vorgesehen.

Abgesehen von diesen Unterschieden stimmt die zweite Ausführungsform insbesondere mit oder im Wesentlichen mit der ersten Ausführungsform überein, sodass zur weiteren Beschreibung der zweiten Ausführungsform auf die Beschreibung der ersten Ausführungsform verwiesen wird.

Aus Fig. 10 ist eine perspektivische Ansicht einer Abwandlung der zweiten Ausführungsform ersichtlich, wobei die stirnseitigen Enden 30 der Seitenteile 11 jeweils um 90° nach außen abgekantet sind. Dabei liegen die abgekanteten Bereiche 30 der Seitenteile 11 an den verlängerten Bereichen der Stirnbleche 17 an, sodass die verlängerten Bereiche der Stirnbleche 17 zusammen mit den abgekanteten Bereichen 30 der Seitenteile 11 die Laschen 28 bilden. Somit ergibt sich im Bereich der Laschen 28 eine Materialdoppelung.

Aus Fig. 11 ist eine perspektivische Ansicht eines Schaltschranks gemäß einer dritten Ausführungsform der Erfindung ersichtlich, wobei der Deckel nicht dargestellt ist, sodass Fig. 11 lediglich den Grundkörper 21 des Schaltschranks zeigt. Gemäß der dritten Ausführungsform ist durch zusätzliche Kantungen 31 am Grundblech 9 eine lediglich schematische angedeutete zusätzliche Ebene 32 für eine innenliegende Montageplatte oder andere größere Bauteile geschaffen. Abgesehen von diesen Unterschieden stimmt die dritte Ausführungsform insbesondere mit oder im Wesentlichen mit der ersten Ausführungsform überein, sodass zur weiteren Beschreibung der dritten Ausführungsform auf die Beschreibung der ersten Ausführungsform verwiesen wird.

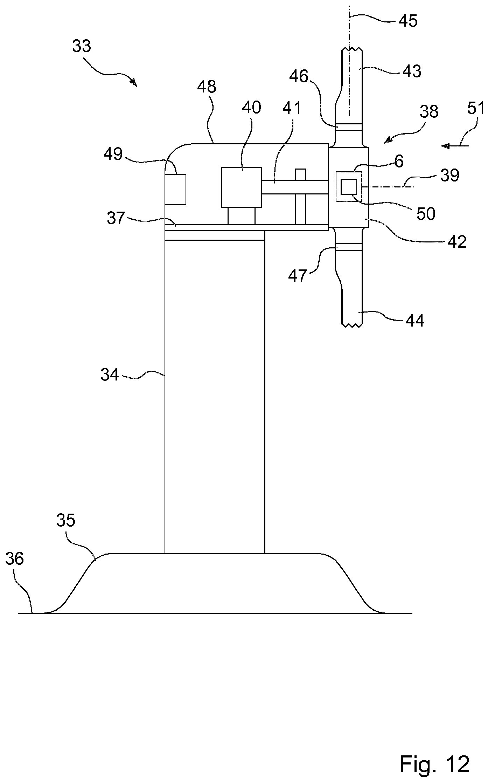

Aus Fig. 12 ist eine schematische Seitenansicht einer Windenergieanlage 33 mit einem erfindungsgemäßen Schaltschrank 6 ersichtlich, der z.B. ein Schaltschrank gemäß der ersten Ausführungsform oder der dritten Ausführungsform ist. Die Windenergieanlage 33 umfasst einen Turm 34, der mittels eines Fundaments 35 im Erdboden 36 verankert ist. An seinem dem Erdboden 36 abgewandten Ende ist auf dem Turm 34 ein Maschinenträger 37 gelagert, an dem ein Rotor 38 um eine Rotorachse 39 drehbar gelagert ist. Ferner ist an dem Maschinenträger 37 ein elektrischer Generator 40 befestigt, der über eine Rotorwelle 41 mit dem Rotor 38 verbunden ist. Der Rotor 38 umfasst eine Rotornabe 42 und mehrere Rotorblätter 43 und 44, die sich jeweils entlang einer quer oder näherungsweise quer zur Rotorachse 39 verlaufenden Blattachse von der Rotornabe 42 wegerstrecken. Die Rotorblätter 43 und 44 sind jeweils um ihre Blattachse drehbar an der Rotornabe 42 gelagert, wobei in Fig. 12 lediglich die Blattachse 45 des Rotorblatts 43 gezeigt ist. Die drehbare Lagerung der Rotorblätter 43 und 44 an der Rotornabe 42 erfolgt dabei jeweils über ein Blattlager 46 bzw. 47. Der Maschinenträger 37 trägt ein Maschinenhaus 48, in dem eine Betriebssteuereinrichtung 49 angeordnet ist, die eine übergeordnete Steuerung für den Betrieb der Windenergieanlage 33 bildet. Ferner ist in der Rotornabe 42 der Schaltschrank 6 angeordnet und befestigt, in dem eine Pitchwinkel-Steuerung 50 vorgesehen ist, mittels welcher der Pitchwinkel der Rotorblätter 43 und 44 steuerbar ist. Der Rotor 38 wird durch Wind 51 zu einer Drehung um die Rotorachse 39 angetrieben.

### Bezugszeichenliste

- 1: herkömmlicher Schaltschrank
- 2: Boden des herkömmlichen Schaltschranks
- 3: Montageöffnungen des herkömmlichen Schaltschranks
- 4: Halterungen des herkömmlichen Schaltschranks
- 5: Seitenfläche des herkömmlichen Schaltschranks
- 6: Schaltschrank
- 7: Halterung
- 8: Halterung
- 9: Grundblech
- 10: Boden des Grundblechs
- 11: Seitenteil des Grundblechs
- 12: Längsrichtung
- 13: Mittelebene
- 14: Loch im Boden
- 15: Loch im Seitenteil
- 16: Außenkante des Grundbleches
- 17: Stirnblech
- 18: Lasche
- 19: Lasche
- 20: Schaltschranköffnung
- 21: Grundkörper
- 22: Innenraum
- 23: Deckel
- 24: Loch
- 25: Befestigungsmittel
- 26: Befestigungsloch
- 27: Halterungsplatte
- 28: Lasche
- 29: Loch
- 30: abgekantetes Ende
- 31: zusätzliche Kantung
- 32: zusätzliche Ebene
- 33: Windenergieanlage
- 34: Turm
- 35: Fundament
- 36: Erdboden
- 37: Maschinenträger
- 38: Rotor
- 39: Rotorachse
- 40: Generator
- 41: Rotorwelle
- 42: Rotornabe
- 43: Rotorblatt
- 44: Rotorblatt
- 45: Blattachse
- 46: Blattlager
- 47: Blattlager
- 48: Maschinenhaus
- 49: Betriebssteuereinrichtung
- 50: Pitchwinkel-Steuerung
- 51: Wind

## Patentansprüche

1. Windenergieanlage mit einem Schaltschrank, der Schaltschrank mit einem U-förmigen Grundblech (9), bestehend aus einem Boden (10) mit zwei Seitenteilen (11), zwei mit dem Grundblech (9) verbundenen Stirnblechen (17) und einem Deckel (23), mit welchem der Schaltschrank (6) verschlossen ist, wobei der Schaltschrank (6) in einem rotierenden Teil (42) der Windenergieanlage (33) angeordnet und an dieser mit wenigstens einer Halterung (7) befestigt ist, **dadurch gekennzeichnet, dass** die Stirnbleche (17) jeweils mit einem Abstand gegenüber einer Außenkante (16) des Grundblechs (9) zurückgesetzt sind, sodass das Grundblech (9) nach außen abstehende Laschen (18, 19) bildet, die jeweils eben ausgebildet und für die Befestigung von Halterungen nutzbar sind, wobei die wenigstens eine Halterung (7) an zwei oder an drei oder mehreren der Laschen (18, 19) befestigt ist und an diesen jeweils mit einer ebenen Anlagefläche anliegt.

2. Windenergieanlage nach Anspruch 1, **dadurch gekennzeichnet, dass** die Laschen (18, 19) durch den Boden (10) und die Seitenteile (11), nur durch die Seitenteile (11) oder durch den Boden (10) und nur eines der Seitenteile (11) gebildet sind.

3. Windenergieanlage nach Anspruch 1 oder 2, **dadurch gekennzeichnet, dass** die wenigstens eine Halterung (7) mit durch den Boden (10) gebildeten Laschen (19) des Schaltschranks (6) eine Ebene bildet.

4. Windenergieanlage nach einem der vorangehenden Ansprüche, **dadurch gekennzeichnet, dass** zwei aneinander angrenzende der Laschen (18, 19), an denen die wenigstens eine Halterung (7) befestigt ist, einen rechten Winkel miteinander einschließen.

5. Windenergieanlage nach einem der vorangehenden Ansprüche, **dadurch gekennzeichnet, dass** in dem Falle, in dem die wenigstens eine Halterung (7) an drei der Laschen (18, 19) befestigt ist, diese eine U-förmige Laschenanordnung bilden.

6. Windenergieanlage nach Anspruch 5, **dadurch gekennzeichnet, dass** die wenigstens eine Halterung (7) einen dem Schaltschrank (6) zugewandten U-förmigen Endbereich aufweist, mittels welchem die wenigstens eine Halterung (7) an den Laschen (18, 19) befestigt ist.

7. Windenergieanlage nach einem der vorangehenden Ansprüche, **dadurch gekennzeichnet, dass** die wenigstens eine Halterung (7) aus Blech besteht.

8. Windenergieanlage nach einem der vorangehenden Ansprüche, **dadurch gekennzeichnet, dass** an dem Grundblech (9) und/oder an wenigstens einem der Stirnbleche (17) zusätzlich Kantungen (31) vorgesehen sind, sodass eine oder wenigstens eine zusätzliche Ebene (32) an dem Grundblech (9) und/oder an dem wenigstens einen Stirnblech (17) geschaffen ist.

9. Windenergieanlage nach einem der vorangehenden Ansprüche, **dadurch gekennzeichnet, dass** die Stirnbleche (17) mit dem Grundblech (9) verschweißt sind.

10. Windenergieanlage nach einem der vorangehenden Ansprüche, **dadurch gekennzeichnet, dass** der Schaltschrank (6) bis auf den Deckel (23) rundum dichtgeschweißt ist.

11. Windenergieanlage nach einem der vorangehenden Ansprüche, **dadurch gekennzeichnet, dass** die Bodenfläche (10) des Grundblechs (9) rechteckig oder quadratisch ist.

## Claims

1. Wind turbine with a control cabinet, the control cabinet comprising a U-shaped base plate (9), consisting of a floor (10) with two side parts (11), two front plates (17) connected to the base plate (9), and a cover (23) with which the control cabinet (6) is closed, wherein the control cabinet (6) is arranged in a rotating part (42) of the wind turbine (33) and is fastened thereto with at least one holder (7), **characterised in that** the front plates (17) are each set back at a distance with respect to the an outer edge (16) of the base plate (9), so that the base plate (9) forms outwardly projecting brackets (18, 19) each of which is shaped flat and can be used to fasten holders, wherein the at least one holder (7) is fastened to two or three or more of the brackets (18, 19) and abuts each of these with a flat bearing surface.

2. Wind turbine according to claim 1, **characterised in that** the brackets (18, 19) are formed by the floor (10) and the side parts (11), only by the side parts (11) or by the floor (10) and only one of the side parts (11).

3. Wind turbine according to claim 1 or 2, **characterised in that** the at least one holder (7) forms a flat surface with brackets (19) of the control cabinet (6) formed by the floor (10).

4. Wind turbine according to any one of the preceding claims, **characterised in that** two adjacent brackets of the brackets (18, 19) to which the at least one holder (7) is fastened, enclose a right angle.

5. Wind turbine according to any one of the preceding claims, **characterised in that** in the case where the at least one holder (7) is fastened to three of the brackets (18, 19), these form a U-shaped bracket arrangement.

6. Wind turbine according to claim 5, **characterised in that** the at least one holder (7) comprises a U-shaped end region facing towards the control cabinet (6), by means of which the at least one holder (7) is fastened to the brackets (18, 19).

7. Wind turbine according to any one of the preceding claims, **characterised in that** the at least one holder (7) consists of sheet metal.

8. Wind turbine according to any one of the preceding claims, **characterised in that** in addition tilting parts (31) are provided on the base plate (9) and/or on at least one of the front plates (17), so that an, or at least one, additional flat surface (32) is formed on the base plate (9) and/or on the at least one front plate (17).

9. Wind turbine according to any one of the preceding claims, **characterised in that** the front plates (17) are welded to the base plate (9).

10. Wind turbine according to any one of the preceding claims, **characterised in that** the control cabinet (6) is welded all round as far as the cover (23).

11. Wind turbine according to any one of the preceding claims, **characterised in that** the floor area (10) of the base plate (9) is rectangular or square.

## Revendications

1. Eolienne avec une armoire de commande, l'armoire de commande avec une tôle de fond (9) en forme de U, composée d'un fond (10) avec deux parties latérales (11), deux tôles frontales (17) raccordées à la tôle de fond (9) et un couvercle (23) avec lequel l'armoire de commande (6) est fermée, l'armoire de commande (6) étant disposée dans une partie (42) rotative de l'éolienne (33) et étant fixée à celle-ci avec au moins une attache (7), **caractérisée en ce que** les tôles frontales (17) sont chacune en retrait d'une certaine distance par rapport à une arête extérieure (16) de la tôle de fond (9) de telle sorte que la tôle de fond (9) forme des pattes (18, 19) dépassant vers l'extérieur qui sont chacune constituées de façon plane et sont utilisables pour la fixation d'attaches, l'attache (7) au moins au nombre de une étant fixée à deux ou à trois ou à plusieurs des pattes (18, 19) et étant adjacente à celles-ci respectivement par une surface d'appui plane.

2. Eolienne
selon la revendication 1, **caractérisée en ce que** les attaches (18, 19) sont formées par le fond (10) et les parties latérales (11), uniquement par les parties latérales (11) ou par le fond (10) et uniquement une des parties latérales (11).

3. Eolienne
selon la revendication 1 ou 2, **caractérisée en ce que** l'attache (7) au moins au nombre de une forme un plan avec des attaches (19) de l'armoire de commande (6) formées par le fond (10).

4. Eolienne selon l'une des revendications précédentes, **caractérisée en ce que** deux des attaches adjacentes (18, 19) auxquelles l'attache (7) au moins au nombre de une est fixée forment un angle droit l'une avec l'autre.

5. Eolienne selon l'une des revendications précédentes, **caractérisée en ce que**, dans le cas où l'attache (7) au moins au nombre de une est fixée à trois des pattes (18, 19), celles-ci forment un ensemble de pattes en forme de U.

6. Eolienne
selon la revendication 5, **caractérisée en ce que** l'attache (7) au moins au nombre de une comporte une zone d'extrémité en forme de U, tournée vers l'armoire de commande (6), au moyen de laquelle l'attache (7) au moins au nombre de une est fixée aux pattes (18, 19).

7. Eolienne selon l'une des revendications précédentes, **caractérisée en ce que** l'attache (7) au moins au nombre de une est composée de tôle.

8. Eolienne selon l'une des revendications précédentes, **caractérisée en ce que** des bordures (31) sont prévues en plus sur la tôle de fond (9) et/ou sur au moins une des tôles frontales (17) de telle sorte qu'un ou au moins un plan (32) supplémentaire est réalisé sur la tôle de fond (9) et/ou sur la tôle frontale (17) au moins au nombre de une.

9. Eolienne selon l'une des revendications précédentes, **caractérisée en ce que** les tôles frontales (17) sont assemblées à la tôle de fond (9) par soudage.

10. Eolienne selon l'une des revendications précédentes, **caractérisée en ce que** l'armoire de commande (6) est soudée de façon étanche tout autour jusqu'au couvercle (23).

11. Eolienne selon l'une des revendications précédentes, **caractérisée en ce que** la surface de fond (10) de la tôle de fond (9) est rectangulaire ou carrée.
